# EUROPEAN PATENT SPECIFICATION

(11) **EP 3 170 681 B1**
(45) Date of publication and mention of the grant of the patent: **12.09.2018**
(21) Application number: 15822597.9
(22) Date of filing: 08.07.2015
(51) Int. Cl.: B60C 11/03, B60C 11/13, B60C 11/11

(54) **TIRE**
REIFEN
PNEU

(30) Priority: 15.07.2014 JP 2014145028
(43) Date of publication of application: 24.05.2017
(73) Proprietor: Bridgestone Corporation, Tokyo 104-8340 (JP)
(72) Inventor: YAMAGUCHI, Masashi, Tokyo 104-8340 (JP)
(74) Representative: Oxley, Robin John George
(86) International application number: PCT/JP2015/069620
(87) International publication number: WO 2016/009912

(56) References cited:
- EP-A1- 2 468 535
- EP-A1- 2 660 077
- WO-A1-2012/043036
- JP-A- 2000 280 714
- JP-A- 2000 280 714
- JP-A- 2004 098 854
- JP-A- 2004 098 854
- JP-A- 2006 143 019
- JP-A- 2008 049 967
- JP-A- 2011 105 182
- JP-A- 2011 105 182

## Description

### BACKGROUND OF THE INVENTION

### Field of the Invention

The present invention relates to a tire provided with a plurality of blocks on a tread portion.

### Related Background of the Invention

Conventionally, a block pattern having a plurality of blocks is formed on a tread portion of various tires such as a tire for heavy load. During running of a vehicle to which such tires are attached, distortion is generated in the tread portion due to deformation of a member in the tread portion of the tire. In addition, the tread portion generates heat due to viscoelasticity of rubber, and thus a temperature of the tread portion rises. Distortion and temperature of the tread portion are main factors affecting durability of the tread portion, and in order to enhance durability of the tread portion, the distortion and temperature rise, generated in the tread portion, are required to be coped with. Particularly, the tread portion on a shoulder portion side is subjected to greater influences of distortion and heat generation than a tread center portion side, by the concentration or the like of the distortion and heat generation at an end portion of the belt.

For coping with this, in conventional tires, generation of distortion is suppressed in the tread portion on the shoulder portion side mainly by adding a reinforcing member into the tread portion or by raising rigidity of the tread portion. However, in this case, along with the increase in the number of members in the tire and a weight of the tire, a cost of the tire may rise. Accordingly, regarding durability of the tread portion, suppression of the temperature rise by cooling the tread portion on the shoulder portion side is also required.

Here, in a tire provided with a plurality of blocks, generally, the plurality of blocks is arranged between two circumferential direction grooves, and a plurality of lateral grooves is formed between the blocks. In such a tire, heat radiation is promoted by an air flow generated in the circumferential direction groove, and the tread portion is cooled. However, it is difficult to adjust heat radiation of the circumferential direction groove by controlling the air flow in the circumferential direction groove. Therefore, in a tire provided with a plurality of blocks between a circumferential direction groove on a tread center portion side and a circumferential direction groove on the shoulder portion side, more heat radiation may sometimes occur in the circumferential direction groove on the tread center portion side than in the circumferential direction groove on the shoulder portion side. In this case, a cooling effect of the tread portion by the circumferential direction groove on the shoulder portion side cannot be increased. Therefore, it is difficult to suppress the temperature rise in the tread portion on the shoulder portion side.

Moreover, a tire in which the temperature rise on a belt end is suppressed by a block groove located on an outer side in a tire radial direction of the belt end has been known (refer to Patent Literature 1).

However, in the conventional tire described in Patent Literature 1, a block groove is required to be formed in a block arranged on the outer side in the tire radial direction of the belt end. Therefore, a position of the block is restricted, and the block groove cannot be formed in some cases depending on the block position.

### Prior Art

### Patent Literature

Patent Literature 1: Japanese Patent Laid-Open No. 2010-125998

Reference is also made to EP 2468535 A1, which discloses a pneumatic tire comprising a tread portion, a carcass comprising a carcass ply of cords extending between bead cores in each bead portion, and a belt comprising a belt ply of belt cords arranged on the axially outward of the carcass.

### SUMMARY OF THE INVENTION

### Problems to be Solved by Invention

An aspect of present invention was made in view of the above-described conventional problems and an object thereof is, in a tire provided with a plurality of blocks between a circumferential direction groove on the tread center portion side and a circumferential direction groove on the shoulder portion side, to enhance heat radiation of the circumferential direction grooves on the shoulder portion side of the plurality of blocks and to increase the cooling effect of the tread portion by the circumferential direction groove on the shoulder portion side.

### Means for solving Problems

An aspect of the present invention is a tire including: a first circumferential direction groove arranged between a tread center portion and a shoulder portion; a second circumferential direction groove arranged on a shoulder portion side of the first circumferential direction groove;
a plurality of lateral grooves opened into the first circumferential direction groove and the second circumferential direction groove; and a plurality of blocks on a tread portion defined by the first circumferential direction groove, the second circumferential direction groove, and the plurality of lateral grooves, wherein an air flow in a direction opposite to a tire rotating direction is generated in the first circumferential direction groove and the second circumferential direction groove during running of a vehicle. Each block of the plurality of blocks has: a first wall surface delimiting the first circumferential direction groove, the first wall surface formed from a position, where a lateral groove of the plurality of lateral grooves on a downstream side of the air flow is opened into the first circumferential direction groove, toward an upstream side of the air flow; a second wall surface delimiting the second circumferential direction groove, the second wall surface formed from a position, where the lateral groove of the plurality of lateral grooves on the downstream side of the air flow is opened into the second circumferential direction groove, toward the upstream side of the air flow; and a block corner portion formed at a position where a lateral groove of the plurality of lateral grooves on the upstream side of the air flow is opened into the first circumferential direction groove. The plurality of blocks including a first block on the upstream side with respect to the air flow and a second block on the downstream side with respect to the air flow, the first block and the second block being adjacent to one another in the tire circumferential direction, a virtual plane obtained by extending, on the downstream side of the air flow, the first wall surface of the first block, the virtual plane passes through a position in the first circumferential direction groove on the tread center portion side of the block corner
portion of the second block and intersects with the second block in the first circumferential direction groove. A groove width of the second circumferential direction groove gradually increases toward the downstream side of the air flow on the second wall surface of the block.

### EFFECTS OF THE INVENTION

According to the present invention, in the tire provided with the plurality of blocks between the circumferential direction groove on the tread center portion side and the circumferential direction groove on the shoulder portion side, heat radiation of the circumferential direction groove on the shoulder portion side of the plurality of blocks can be enhanced, and thus a cooling effect of the tread portion by the circumferential direction groove on the shoulder portion side can be increased.

### BRIEF DESCRIPTION OF THE DRAWINGS

Fig. 1 is a plan view illustrating a tread pattern of a tire of the present embodiment;
Fig. 2 is a plan view illustrating a portion of the tread pattern of the present embodiment;
Fig. 3 is a perspective view of a tread portion illustrated in Fig. 2;
Fig. 4 is a plan view illustrating a first block corner portion formed in a curved shape;
Fig. 5 is a plan view illustrating a block of another embodiment;
Fig. 6 is a plan view illustrating a block of another embodiment;
Fig. 7 is a plan view illustrating a block of another embodiment; and
Fig. 8 is a plan view illustrating a tread pattern of a conventional product.

### DESCRIPTION OF THE PREFERRED EMBODIMENTS

An embodiment of a tire of the present invention will be described by referring to the attached drawings.

The tire of the present embodiment is a pneumatic tire for a vehicle (a tire for heavy load and a tire for automobile, for example) and is formed having a known structure by a general tire constituent member. Namely, the tire includes a pair of bead portions, a pair of side wall portions located outsides in a tire radial direction in the pair of bead portions, a tread portion in contact with a road surface, and a pair of shoulder portions located between the tread portion and the pair of side wall portions. Furthermore, the tire includes a pair of bead cores, a carcass arranged between the pair of bead cores, a belt arranged on an outer periphery side of the carcass, and a tread rubber having a predetermined tread pattern.

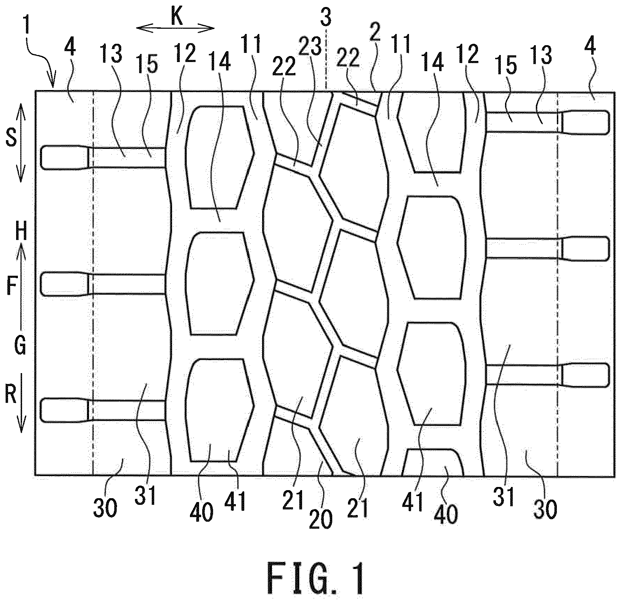

Fig. 1 is a plan view illustrating a tread pattern of a tire 1 of the present embodiment and schematically illustrates a part of a tread portion 2 in a tire periphery direction S.

Note that the tire 1 is a tire for which a rotating direction during forward motion of the vehicle is designated and it rotates in the tire rotating direction R during forward motion of the vehicle. The tire rotating direction R is designated in correspondence to the tread pattern of the tire 1, and the tire 1 is attached to the vehicle so that the tire rotating direction R is matched.

As illustrated, the tire 1 includes a plurality of circumferential direction grooves 11 and 12, a plurality of lug grooves 13, a plurality of lateral grooves 14, and a plurality of block rows 20, 30, and 40, in the tread portion 2. Each of the plurality of circumferential direction grooves 11 and 12 is a main groove (circumferential direction main groove) extending in the tire circumferential direction S, and is continuously formed along the tire circumferential direction S. Moreover, a plurality of circumferential direction grooves 11 and 12 is formed of a first circumferential direction groove 11 arranged between a tread center portion 3 and a shoulder portion 4 and a second circumferential direction groove 12 arranged on the shoulder portion 4 side of the first circumferential direction groove 11. The tread center portion 3 is a center part of the tread portion 2 in a tire width direction K, and a tire equatorial plane is located on the tread center portion 3. The shoulder portion 4 is located on an outer side of the tread portion 2 in the tire width direction K.

The first circumferential direction groove 11 is a center-side circumferential direction groove formed on the tread center portion 3 side, and the tire 1 includes two first circumferential direction grooves 11 formed on both sides of the tread center portion 3 in the tire width direction K. The second circumferential direction groove 12 is an outer-side circumferential direction groove formed on an outer side of the first circumferential direction groove 11 in the tire width direction K, and the tire 1 includes two second circumferential direction grooves 12 arranged between the first circumferential direction grooves 11 and the shoulder portion 4 (tread end), respectively. A pair of first circumferential direction groove 11 and the second circumferential direction groove 12 is arranged between the tread center portion 3 and the shoulder portion 4 and is also formed on both sides of the tread center portion 3 in the tire width direction K. The tread portion 2 is partitioned by the plurality of circumferential direction grooves 11 and 12, and a plurality of the block rows 20, 30, and 40 is formed on the tread portion 2.

Each of the plurality of block rows 20, 30, and 40 is a land portion extending along the tire circumferential direction S, and has a plurality of blocks 21, 31, and 41, respectively. The plurality of block rows 20, 30, and 40 is formed of one center block row 20, two shoulder block rows 30, and two intermediate block rows 40. The center block row 20 has a plurality of connecting grooves 22 and one circumferential direction sub groove 23 extending in the tire circumferential direction S and is arranged on the tread center portion 3. The circumferential direction sub groove 23 is a circumferential direction thin groove thinner than the circumferential direction grooves 11 and 12 and is connected to the two first circumferential direction grooves 11 by the plurality of connecting grooves 22. The center block row 20 is partitioned by the plurality of connecting grooves 22 and the one circumferential direction sub groove 23, and the plurality of blocks 21 are formed within the center block row 20.

The shoulder block row 30 has a plurality of lug grooves 13 and is arranged on an outermost side (shoulder portion 4 side) in the tire width direction K and in the tread portion 2. The lug groove 13 extends in the tire width direction K and is formed from the second circumferential direction groove 12 to the shoulder portion 4. The plurality of blocks 31 of the shoulder block row 30 is sequentially arranged in the tire circumferential direction S, and the lug groove 13 is formed between the blocks 31 adjacent in the tire circumferential direction S. In addition, the lug groove 13 is formed on the shoulder portion 4 side of the second circumferential direction groove 12 and is opened into the second circumferential direction groove 12. The tire 1 includes a raised portion 15 formed within each of the lug grooves 13. The raised portion 15 is raised from a groove bottom of the lug groove 13 and connects groove walls (wall surfaces of the block 31) on both sides of the lug groove 13. Here, the raised portion 15 is a tie bar, and at least a part of the lug groove 13 is shallower than the second circumferential direction groove 12 by the raised portion 15.

The intermediate block row 40 has a plurality of lateral grooves 14 and is arranged between the center block row 20 and the shoulder block row 30 in the tread portion 2. Each of the plurality of lateral grooves 14 is a width direction groove extending in the tire width direction K and is formed from the first circumferential direction groove 11 to the second circumferential direction groove 12. The plurality of blocks 41 of the intermediate block row 40 is sequentially arranged in the tire circumferential direction S, and the lateral groove 14 is formed between the blocks 41 adjacent in the tire circumferential direction S. Furthermore, the lateral groove 14 is formed between the first circumferential direction groove 11 and the second circumferential direction groove 12 and opened into the first circumferential direction groove 11 and the second circumferential direction groove 12.

As described above, the tire 1 includes the plurality of blocks 41 of the intermediate block row 40 arranged between the tread center portion 3 and the shoulder portion 4. The first circumferential direction groove 11 extends along the wall surfaces of the plurality of blocks 41 on the tread center portion 3 side, whereas the second circumferential direction groove 12 extends along the wall surfaces of the plurality of blocks 41 on the shoulder portion 4 side. The plurality of lateral grooves 14 is arranged separately in the tire circumferential direction S and cross the intermediate block row 40 between the first circumferential direction groove 11 and the second circumferential direction groove 12. The plurality of blocks 41 is defined by the first circumferential direction groove 11, the second circumferential direction groove 12, and the plurality of lateral grooves 14 on the tread portions 2, and each of the blocks 41 is formed in a predetermined polygonal shape when viewed from an outside in the tire radial direction.

The tire 1 is attached to the vehicle and rotates in the tire rotating direction R along with running (forward movement) of the vehicle. During the vehicle running (tire rotation) by forward movement of the vehicle, an air flow in a predetermined direction is generated in the first circumferential direction groove 11 and the second circumferential direction groove 12. The air flow is a relative flow (wind) of air generated by rotation of the tire 1 and is generated in a direction opposite to the tire rotating direction R. An arrow F illustrated in Fig. 1 is a direction of the air flow generated in the first circumferential direction groove 11 and the second circumferential direction groove 12, and the air flow in the same direction is generated in the first circumferential direction groove 11 and the second circumferential direction groove 12. In the tire 1 of the present embodiment, the plurality of blocks 41 formed between the first circumferential direction groove 11 and the second circumferential direction groove 12 controls the air flow and adjusts the heat radiation in the first circumferential direction groove 11 and the second circumferential direction groove 12. As a result, the heat radiation of the second circumferential direction groove 12 located on the shoulder portion 4 side is enhanced. Hereinafter, the adjustment of the heat radiation will be described in detail.

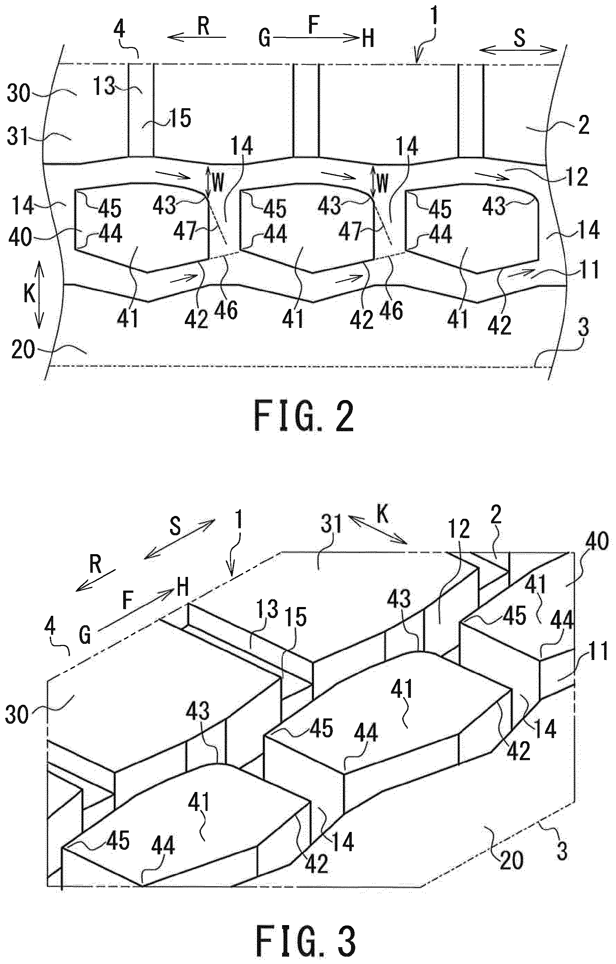

Fig. 2 is a plan view illustrating a part of the tread pattern of the present embodiment and illustrates a portion including the block 41 in a state in which Fig. 1 is rotated clockwise by 90°. In addition, in Fig. 2, the center block row 20 is simplified. Fig. 3 is a perspective view of the tread portion 2 illustrated in Fig. 2.

As illustrated, each block 41 of the plurality of blocks 41 has a first wall surface 42 on the tread center portion 3 side, a second wall surface 43 on the shoulder portion 4 side, a first block corner portion 44 on the tread center portion 3 side, and a second block corner portion 45 on the shoulder portion 4 side. In the first circumferential direction groove 11 and the second circumferential direction groove 12 (refer to the air flow direction F), the air flows from an upstream side G of the air flow toward the downstream side H of the air flow and cools the tread portion 2.

The first wall surface 42 of the block 41 is formed from a position where the lateral groove 14 on the downstream side H of the air flow is opened into the first circumferential direction groove 11, toward the upstream side G of the air flow. The second wall surface 43 of the block 41 is formed from a position where the lateral groove 14 on the downstream side H of the air flow is opened into the second circumferential direction groove 12, toward the upstream side G of the air flow. The first wall surface 42 is located in the first circumferential direction groove 11, and the second wall surface 43 is located in the second circumferential direction groove 12. Here, the first wall surface 42 is a plane inclined to the shoulder portion 4 side with respect to the tire circumferential direction S toward the downstream side H of the air flow. In contrast to this, the second wall surface 43 is a curved surface inclined to the tread center portion 3 side with respect to the tire circumferential direction S toward the downstream side H of the air flow. In addition, the second wall surface 43 is a projecting surface curved in an arc shape and smoothly connects to the wall surface of the circumferential direction block 41. On the shoulder portion 4 side of the block 41, the second wall surface 43 is curved toward an inside of the lateral groove 14 on the downstream side H of the air flow.

The first block corner portion 44 of the block 41 is a corner portion of the block 41 formed at a position where the lateral groove 14 on the upstream side G of the air flow is opened into the first circumferential direction groove 11, and is formed at a position where the wall surface of the block 41 in the lateral groove 14 and the wall surface of the block 41 in the first circumferential direction groove 11 intersect with each other. The second block corner portion 45 of the block 41 is a corner portion of the block 41 formed at a position where the lateral groove 14 on the upstream side G of the air flow is opened into the second circumferential direction groove 12 and is formed at a position where the wall surface of the block 41 in the lateral groove 14 and the wall surface of the block 41 in the second circumferential direction groove 12 intersect with each other. The wall surface of the block 41 is formed in directions different from each other at the first block corner portion 44 and the second block corner portion 45 as boundaries.

When the two blocks 41 on the upstream side G and on the downstream side H of the air flow adjacent in the tire circumferential direction S are viewed, a virtual surface (first virtual surface) 46 obtained by extending the first wall surface 42 of the block 41 on the upstream side G is located on an outer side of the lateral groove 14 (lateral groove 14 on the downstream side H) between the two blocks 41. The first virtual surface 46 is an extension surface (virtual extension surface) obtained by virtually extending the first wall surface 42 on the downstream side H of the air flow and smoothly continues from the first wall surface 42 so as to form the same plane as the first wall surface 42. In addition, the first virtual surface 46 is extended toward the block 41 on the downstream side H and is arranged along the first circumferential direction groove 11. In all the blocks 41 of the intermediate block row 40, the first virtual surface 46 of the block 41 on the upstream side G passes through a position in the first circumferential direction groove 11 on the tread center portion 3 side of the first block corner portion 44. When the first virtual surface 46 passes through the position in the first circumferential direction groove 11, the first virtual surface 46 intersects with the block 41 (wall surface of the block 41) on the downstream side H in the first circumferential direction groove 11.

A groove width W of the second circumferential direction groove 12 gradually increases toward the downstream side H (lateral groove 14 on the downstream side H) of the air flow in the second wall surface 43 of the block 41. Furthermore, when the two blocks 41 on the upstream side G and the downstream side H of the air flow adjacent in the tire circumferential direction S are viewed, a virtual surface (second virtual surface) 47 extended from the second wall surface 43 of the block 41 on the upstream side G is extended toward the tread center portion 3 side. The second virtual surface 47 is an extension surface (virtual extension surface) obtained by virtually extending the second wall surface 43 on the downstream side H of the air flow and smoothly continues from the second wall surface 43 so as to form the same plane as the second wall surface 43. In all the blocks 41 of the intermediate block row 40, the second virtual surface 47 of the block 41 on the upstream side G is extended toward an inside of the lateral groove 14 (lateral groove 14 on the downstream side H) between the two blocks 41 without intersecting with the second block corner portion 45 of the block 41 on the downstream side H. The second virtual surface 47 passes through the lateral groove 14 and intersects with the block 41 (wall surface of the block 41) on the downstream side H in the lateral groove 14. Alternatively, the second virtual surface 47 passes through the lateral groove 14 and is extended to the first circumferential direction groove 11.

In the tire 1 described above, the first virtual surface 46 passes through the position in the first circumferential direction groove 11, and thus the air having flowed along the first wall surface 42 becomes hard to flow into the lateral groove 14 easily. Accordingly, the flow of air from the first circumferential direction groove 11 to the lateral groove 14 and the second circumferential direction groove 12 is suppressed, and occurrences of backflow, swirl flow, and stagnation of the air in the second circumferential direction groove 12 are prevented. The air in the second circumferential direction groove 12 is not disturbed by the air flowing in from the lateral groove 14, but smoothly flows toward the downstream side H in the second circumferential direction groove 12. Along with this, a flow rate of the air which is a cooling medium increases in the second circumferential direction groove 12, and cooling of the tread portion 2 is promoted. In addition, since the air flow in the first circumferential direction groove 11 deviates from the first block corner portion 44, a pressure rise of the air at the first block corner portion 44 is suppressed.

Since the groove width W of the second circumferential direction groove 12 gradually increases in the second wall surface 43, a pressure of the air around the second wall surface 43 becomes lower than the pressure of the air around the second block corner portion 45 on the second circumferential direction groove 12 side of one block 41. Along with this, the air is drawn from the upstream side G of the second wall surface 43 toward the periphery of the second wall surface 43 in the second circumferential direction groove 12, and the air flow is accelerated. In addition, since the air flow hits the second block corner portion 45, the air pressure rises at the second block corner portion 45. As a result, the air pressure at the second block corner portion 45 becomes higher than the air pressure at the first block corner portion 44 in the lateral groove 14, and the air flows from the second block corner portion 45 toward the first block corner portion 44. Accordingly, an air flow from the second circumferential direction groove 12 toward the lateral groove 14 is generated, and inflow of the air from the lateral groove 14 to the second circumferential direction groove 12 is suppressed. Furthermore, the air flow in the second circumferential direction groove 12 is further accelerated.

As described above, in the tire 1 of the present embodiment, heat radiation of the first circumferential direction groove 11 and the second circumferential direction groove 12 is adjusted by controlling the air flow during running of a vehicle. Furthermore, the heat radiation can be promoted by accelerating the air flow in the second circumferential direction groove 12 on the shoulder portion 4 side. Therefore, the heat radiation in the second circumferential direction groove 12 can be enhanced, and the cooling effect of the tread portion 2 by the second circumferential direction groove 12 can be increased. Along with this, the temperature rise of the tread portion 2 can be suppressed by cooling the tread portion 2 on the shoulder portion 4 side. Durability of the tread portion 2 can also be effectively enhanced by lowering the temperature of the tread portion 2 at an end portion of the belt.

When the second virtual surface 47 is extended toward the inside of the lateral groove 14, the air flowing along the second wall surface 43 easily flows into the lateral groove 14. In addition, the second wall surface 43 is inclined to the tread center portion 3 side, and thus the air easily flows from the second circumferential direction groove 12 toward the lateral groove 14. When the second wall surface 43 is a curved surface, the air smoothly flows along the second wall surface 43, and the air flow directed toward the lateral groove 14 is easily generated. Accordingly, the air pressure can be reliably lowered in the periphery of the second wall surface 43, and the air flow in the second circumferential direction groove 12 can be further accelerated. By forming the raised portion 15 on the lug groove 13 of the shoulder block row 30, the air flowing through the second circumferential direction groove 12 can be prevented from flowing out through the lug groove 13. As a result, the air flow can be concentrated to the second circumferential direction groove 12.

The groove width W of the second circumferential direction groove 12 is permissible as long as it gradually increases toward the downstream side H of the air flow at least on the second wall surface 43. Therefore, in addition to the second wall surface 43, the groove width W of the second circumferential direction groove 12 may be gradually widened toward the downstream side H of the air flow on the upstream side G of the second wall surface 43. Moreover, the first block corner portion 44 and the second block corner portion 45 may be corner portions in bent shapes or may be corner portions formed in curved shapes.

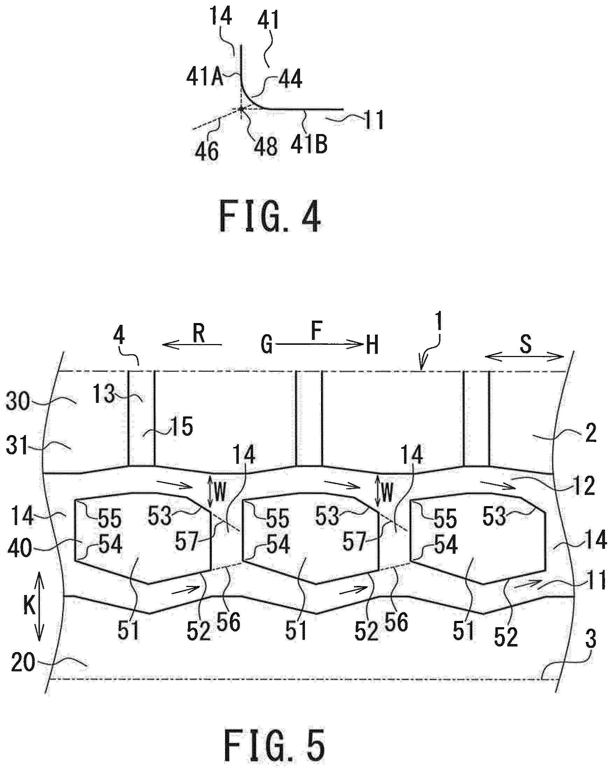

Fig. 4 is a plan view illustrating the first block corner portion 44 formed in a curved shape.

In this case, the first virtual surface 46 passes through, for example, a virtual intersection position 48, and intersects with the first block corner portion 44 as illustrated. The virtual intersection position 48 is a position where virtual surfaces extended from wall surfaces 41A and 41B of the block 41 on the both sides of the first block corner portion 44 intersect with each other. The one wall surface 41A is a wall surface of the block 41 in the lateral groove 14, and the other wall surface 41B is a wall surface of the block 41 in the first circumferential direction groove 11. The air easily flows from the lateral groove 14 to the first circumferential direction groove 11, by forming the first block corner portion 44 into a curved shape.

Subsequently, blocks of other embodiments will be described. Each of the following blocks is an example in which a part of the shape of the block 41 is changed, and an effect similar to the above-described effect is exerted. In each block, the same names as those in the block 41 are attached to the same configurations as the block 41, and detailed explanation of each configuration will be omitted. Moreover, in the following description, explanation for the same item as the already-described item will be omitted.

Figs. 5 to 7 are plan views illustrating blocks 51, 61, and 71 of other embodiments and illustrate a part of tread patterns including the blocks 51, 61, and 71 similarly to Fig. 2.

The block 51 illustrated in Fig. 5 has a first wall surface 52, a second wall surface 53, a first block corner portion 54, and a second block corner portion 55. A first virtual surface 56 is an extension surface extended from the first wall surface 52, and a second virtual surface 57 is an extension surface extended from the second wall surface 53. Here, only the second wall surface 53 is different from the second wall surface 43 of the block 41. The second wall surface 53 of the block 51 is a plane inclined to the tread center portion 3 side with respect to the tire circumferential direction S toward the downstream side H of the air flow. The second wall surface 53 is inclined toward the inside of the lateral groove 14 on the downstream side H of the air flow. In this second wall surface 53, the air can easily flow from the second circumferential direction groove 12 toward the lateral groove 14. Therefore, the air pressure can be reliably lowered around the second wall surface 53, and the air flow in the second circumferential direction groove 12 can be further accelerated.

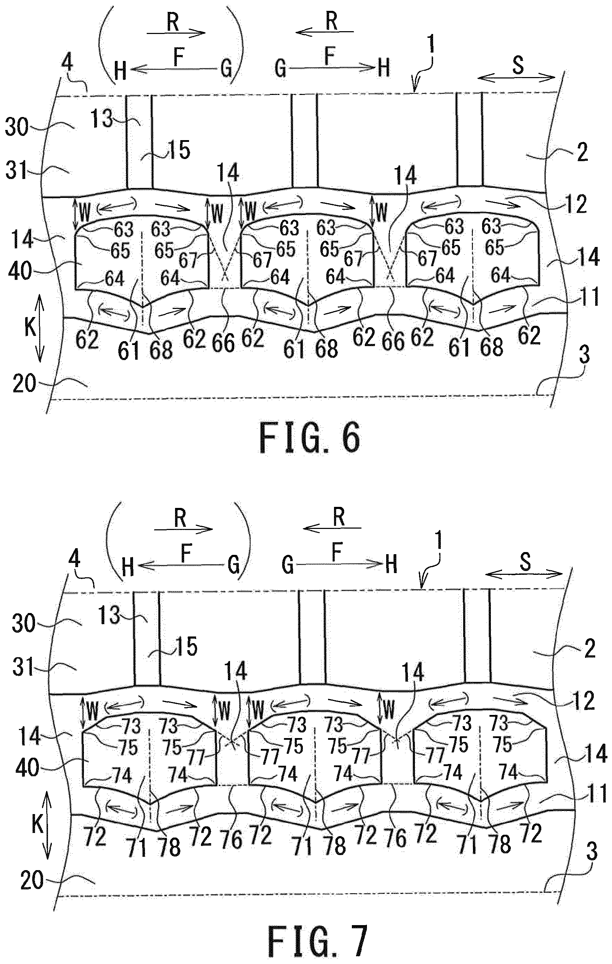

In the block 61 illustrated in Fig. 6, in a plan view of the block 61 when viewed from an outside in the tire radial direction, the block 61 is formed line-symmetrically to a center line 68 passing through the center of the tire circumferential direction S. Therefore, the block 61 has a first wall surface 62, a second wall surface 63, a first block corner portion 64, and a second block corner portion 65, on both sides of the center line 68. In addition, the first virtual surface 66 is an extension surface extended from the first wall surfaces 62 on the both sides of a center line 68, and a second virtual surface 67 is an extension surface extended from the second wall surfaces 63 on the both sides of the center line 68. The first wall surface 62 is a curved surface recessed in the block 61, and the two first wall surfaces 62 intersect with each other on the center line 68. In this block 61, the tire rotating direction R can be set in both directions of the tire circumferential direction S. Namely, even if the air flow direction F becomes an opposite direction, the block 61 satisfies the conditions similar to those of the block 41 but acts in the same way as the block 41. Therefore, it is not necessary to designate the tire rotating direction R when the tire is to be attached, and convenience of a user is enhanced.

In the block 71 illustrated in Fig. 7, in the same way as the block 61, the block 71 is formed line-symmetrically to a center line 78 passing through the center of the tire circumferential direction S, in a plan view of the block 71 when viewed from the outside in the tire radial direction. Accordingly, the block 71 has a first wall surface 72, a second wall surface 73, a first block corner portion 74, and a second block corner portion 75 on both sides of the center line 78. Moreover, the first virtual surface 76 is an extension surface extended from the first wall surfaces 72, on both sides of the center line 78, and a second virtual surface 77 is an extension surface extended from the second wall surfaces 73 on the both sides of the center line 78. The first wall surface 72 is a curved surface recessed in the block 71, and the two first wall surfaces 72 intersect with each other on the center line 78. The second wall surface 73 of the block 71 is a plane inclined to the tread center portion 3 side with respect to the tire circumferential direction S toward the downstream side H of the air flow in the same way as the second wall surface 53 of the block 51. The second wall surface 73 is inclined toward the inside of the lateral groove 14 on the downstream side H of the air flow. In this block 71, in the same way as the block 61, the tire rotating direction R can be set in both directions of the tire circumferential direction S. Namely, even if the air flow direction F becomes an opposite direction, the block 71 satisfies the conditions similar to those of the block 41, and the effect similar to that of the block 41 is exerted. Therefore, it is not necessary to designate the tire rotating direction R when the tire is to be attached, and convenience of a user is enhanced.

When the tire 1 is a tire for heavy load (such as a tire for truck/bus, for example), a heat generation amount of the tread portion 2 tends to be larger. Therefore, the present invention is suitable for the tire for heavy load. However, the present invention can be applied to various tires other than the tire for heavy load.

### (Tire test)

In order to confirm the effects of the present embodiment, a tire of the embodiment (referred to as an embodied product) and a tire of the conventional example (referred to as a conventional product) were produced, and their performances were evaluated. The embodied product includes a plurality of blocks 61 illustrated in Fig. 6 in the intermediate block row 40. In contrast, the conventional product is different from the embodied product only in the plurality of blocks of the intermediate block row 40.

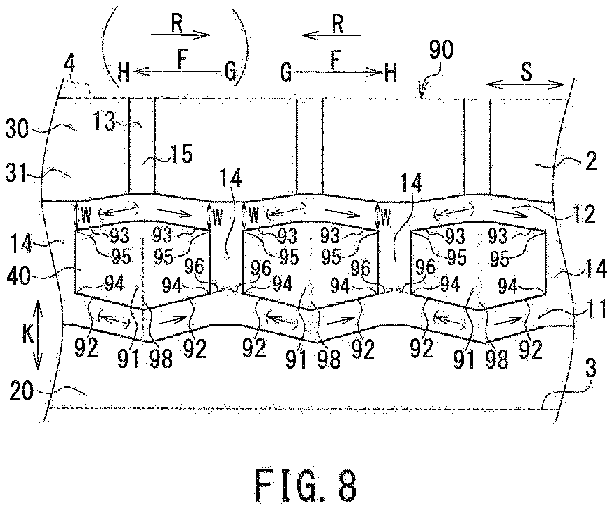

Fig. 8 is a plan view illustrating a tread pattern of the conventional product and illustrates a part of the tread pattern similarly to Fig. 6.

As illustrated, in a tire 90 of the conventional product, the block 91 is formed line-symmetrically with respect to a center line 98 passing through the center of the tire circumferential direction S, in a plan view of the block 91 of the intermediate block row 40 when viewed from the outside in the tire radial direction. Furthermore, the block 91 has a first wall surface 92, a second wall surface 93, a first block corner portion 94, and a second block corner portion 95, on both sides of the center line 98. A first virtual surface 96 is an extension surface extended from the first wall surfaces 92 on both sides of the center line 98. When the two blocks 91 on the upstream side G and the downstream side H of the air flow adjacent in the tire circumferential direction S are viewed, the first virtual surface 96 of the block 91 on the upstream side G is extended toward the inside of the lateral groove 14 between the two blocks 91 and intersects with the block 91 on the downstream side H in the lateral groove 14. The groove width W of the second circumferential direction groove 12 is a constant width in the second wall surface 93.

A drum durability test was conducted using the embodied product and the conventional product, under the following conditions:
Tire size: 11R22.5
Tire load: 2740 kgf (=26.9 kN)
Tire internal pressure: 700 kPa
Drum speed: 65 km/h
Temperature during test: 38°C

In the test, the embodied product and the conventional product were brought into contact with an outer circumferential surface of a drum, and the same load was applied to the embodied product and the conventional product. In that state, the drum was rotated, and the embodied product and the conventional product were rotated (made to run) by the drum. Thereby, traveling distances sufficient for belts of the embodied product and the conventional product to endure were measured, and belt durability of the embodied product and the conventional product was evaluated. Furthermore, heat transfer rate at the groove bottom of the second circumferential direction groove 12 was measured in the embodied product and the conventional product, and heat radiation of the second circumferential direction groove 12 was evaluated.

**[Table 1]**

| | EMBODIED PRODUCT | CONVENTIONAL PRODUCT |
|---|---|---|
| HEAT TRANSFER RATE AT GROOVE BOTTOM OF SECOND CIRCUMFERENTIAL DIRECTION GROOVE | 140 | 100 |
| BELT DURABILITY TRAVELING DISTANCE | 115 | 100 |

Table 1 shows test results of the embodied product and the conventional product. The test results are expressed by index with the conventional product at 100 and indicate that the larger the numerical value is, the higher the performances.

As shown in Table 1, the heat transfer rate of the embodied product was 140, which was remarkably higher than the heat transfer rate of the conventional product. As a result, it was known that in the embodied product, the heat radiation of the second circumferential direction groove 12 was enhanced. Furthermore, the traveling distance of the embodied product was 115, which was longer than the traveling distance of the conventional product. It was known that in the embodied product, the cooling effect by the second circumferential direction groove 12 became higher, and the belt durability was enhanced.

### Reference Signs List

- 1: tire
- 2: tread portion
- 3: tread center portion
- 4: shoulder portion
- 11: first circumferential direction groove
- 12: second circumferential direction groove
- 13: lug groove
- 14: lateral groove
- 15: raised portion
- 20: center block row
- 21: block
- 22: connecting groove
- 23: circumferential direction sub groove
- 30: shoulder block row
- 31: block
- 40: intermediate block row
- 41: block
- 42: first wall surface
- 43: second wall surface
- 44: first block corner portion
- 45: second block corner portion
- 46: first virtual surface
- 47: second virtual surface
- 48: virtual intersection position
- 51: block
- 52: first wall surface
- 53: second wall surface
- 54: first block corner portion
- 55: second block corner portion
- 56: first virtual surface
- 57: second virtual surface
- 61: block
- 62: first wall surface
- 63: second wall surface
- 64: first block corner portion
- 65: second block corner portion
- 66: first virtual surface
- 67: second virtual surface
- 68: center line
- 71: block
- 72: first wall surface
- 73: second wall surface
- 74: first block corner portion
- 75: second block corner portion
- 76: first virtual surface
- 77: second virtual surface
- 78: center line
- F: air flow direction
- G: upstream side
- H: downstream side
- K: tire width direction
- R: tire rotating direction
- S: tire circumferential direction
- W: groove width

## Claims

1. A tire (1) comprising:
a first circumferential direction groove (11) arranged between a tread center portion (3) and a shoulder portion;
a second circumferential direction groove (12) arranged on a shoulder portion side of the first circumferential direction groove (11);
a plurality of lateral grooves (14) opened into the first circumferential direction groove (11) and the second circumferential direction groove (12); and
a plurality of blocks (21, 31, 41, 51, 61, 71) on a tread portion (2) defined by the first circumferential direction groove (11), the second circumferential direction groove (12), and the plurality of lateral grooves (14), an air flow in a direction opposite to a tire rotating direction (R) being generated in the first circumferential direction groove (11) and the second circumferential direction groove (12) during running of a vehicle; wherein
each block (21, 31, 41, 51, 61, 71) of the plurality of blocks (21, 31, 41, 51, 61, 71) has:
a first wall surface (42, 52, 62, 72) delimiting the first circumferential direction groove (11), the first wall surface (42, 52, 62, 72) formed from a position where a lateral groove (14) of the plurality of lateral grooves (14) on a downstream side (H) of the air flow is opened into the first circumferential direction groove (11), toward an upstream side (G) of the air flow;
a second wall surface (43, 53, 63, 73) delimiting the second circumferential direction groove (12), the second wall surface (43, 53, 63, 73) formed from a position where the lateral groove (14) of the plurality of lateral grooves (14) on the downstream side (H) of the air flow is opened into the second circumferential direction groove (12), toward the upstream side (G) of the air flow; and
a block corner portion formed at a position where a lateral groove (14) of the plurality of lateral grooves (14) on the upstream side (G) of the air flow is opened into the first circumferential direction groove (11); and
the plurality of blocks (21, 31, 41, 51, 61, 71) comprising a first block (21, 31, 41, 51, 61, 71) on the upstream side (G) with respect to the air flow and a second block (21, 31, 41, 51, 61, 71) on the downstream side (H) with respect to the air flow, the first block (21, 31, 41, 51, 61, 71) and the second block (21, 31, 41, 51, 61, 71) being adjacent to one another in the tire circumferential direction (S), and
a groove width (W) of the second circumferential direction groove (12) gradually increases toward the downstream side (H) of the air flow on the second wall surface (43, 53, 63, 73) of the block (21, 31, 41, 51, 61, 71), **characterized in that**,
a virtual plane obtained by extending, on the downstream side (H) of the air flow, the first wall surface (42, 52, 62, 72) of the first block (21, 31, 41, 51, 61, 71), the virtual plane passes through a position in the first circumferential direction groove (11) on the tread center portion (3) side of the block corner portion of the second block (21, 31, 41, 51, 61, 71) and intersects with the second block (21, 31, 41, 51, 61, 71) in the first circumferential direction groove (11).

2. The tire (1) according to claim 1, wherein
a virtual surface extended on the downstream side (H) of the air flow from the second wall surface (43, 53, 63, 73) of the first block (21, 31, 41, 51, 61, 71) is extended toward an inside of the lateral groove (14) between the two first block (21, 31, 41, 51, 61, 71) and the second block (21, 31, 41, 51, 61, 71).

3. The tire (1) according to claim 1, wherein
the second wall surface (43, 53, 63, 73) of each of the blocks (21, 31, 41, 51, 61, 71) is inclined to the tread center portion (3) side with respect to the tire circumferential direction (S) toward the downstream side (H) of the air flow.

4. The tire (1) according to claim 1, wherein
the second wall surface (43, 53, 63, 73) of each of the blocks (21, 31, 41, 51, 61, 71) is a curved surface curved toward the inside of the lateral groove (14) on the downstream side (H) of the air flow.

5. The tire (1) according to claim 1, wherein
the second wall surface (43, 53, 63, 73) of each of the blocks (21, 31, 41, 51, 61, 71) is a plane inclined to the tread center portion (3) side with respect to the tire circumferential direction (S) toward the downstream side (H) of the air flow.

6. The tire (1) according to claim 1, further comprising:
a lug groove (13) formed on a shoulder portion (4) side of the second circumferential direction groove (12) and opened into the second circumferential direction groove (12); and
a raised portion (15) raised from a groove bottom of the lug groove (13) and connecting groove (22) walls of both sides of the lug groove (13).

7. The tire (1) according to claim 6, wherein the raised portion (15) is formed on the lug groove (13) of a shoulder block row (30).

8. The tire (1) according to claim 1, wherein each of the plurality of blocks (21, 31, 41, 51, 61, 71) comprises a polygonal shape.

## Patentansprüche

1. Reifen (1), der Folgendes umfasst:
eine erste Umfangsrichtungsrille (11), die zwischen einem Laufflächenmittelabschnitt (3) und einem Schulterabschnitt angeordnet ist;
eine zweite Umfangsrichtungsrille (12), die an einer Seite des Schulterabschnitts der ersten Umfangsrichtungsrille (11) angeordnet ist;
eine Vielzahl von seitlichen Rillen (14), die in die erste Umfangsrichtungsrille (11) und die zweite Umfangsrichtungsrille (12) geöffnet sind; und
eine Vielzahl von Blöcken (21, 31, 41, 51, 61, 71) an einem Laufflächenabschnitt (2), der durch die erste Umfangsrichtungsrille (11), die zweite Umfangsrichtungsrille (12) und die Vielzahl von seitlichen Rillen (14) definiert ist, wobei ein Luftstrom in eine Richtung entgegengesetzt zu einer Reifendrehrichtung (R) in der ersten Umfangsrichtungsrille (11) und der zweiten Umfangsrichtungsrille (12) während des Fahrens eines Fahrzeugs erzeugt wird; wobei
jeder Block (21, 31, 41, 51, 61, 71) der Vielzahl von Blöcken (21, 31, 41, 51, 61, 71) Folgendes aufweist:
eine erste Wandfläche (42, 52, 62, 72), die die erste Umfangsrichtungsrille (11) begrenzt, wobei die erste Wandfläche (42, 52, 62, 72) von einer Position aus ausgebildet ist, wo eine seitliche Rille (14) der Vielzahl von seitlichen Rillen (14) an einer stromabwärtigen Seite (H) des Luftstroms in die erste Umfangsrichtungsrille (11) zu einer stromaufwärtigen Seite (G) des Luftstroms geöffnet wird;
eine zweite Wandfläche (43, 53, 63, 73), die die zweite Umfangsrichtungsrille (12) begrenzt, wobei die zweite Wandfläche (43, 53, 63, 73) von einer Position aus ausgebildet ist, wo die seitliche Rille (14) der Vielzahl von seitlichen Rillen (14) an der stromabwärtigen Seite (H) des Luftstroms in die zweite Umfangsrichtungsrille (12) zu der stromaufwärtigen Seite (G) des Luftstroms geöffnet wird; und
einen Blockeckabschnitt, der an einer Position ausgebildet ist, wo eine seitliche Rille (14) der Vielzahl von seitlichen Rillen (14) an der stromabwärtigen Seite (G) des Luftstroms in die erste Umfangsrichtungsrille (11) geöffnet wird; und
wobei die Vielzahl von Blöcken (21, 31, 41, 51, 61, 71) einen ersten Block (21, 31, 41, 51, 61, 71) an der stromaufwärtigen Seite (G) in Bezug auf den Luftstrom und einen zweiten Block (21, 31, 41, 51, 61, 71) an der stromabwärtigen Seite (H) in Bezug auf den Luftstrom umfassen, wobei der erste Block (21, 31, 41, 51, 61, 71) und der zweite Block (21, 31, 41, 51, 61, 71) in die Reifenumfangsrichtung (S) benachbart zueinander sind, und
wobei eine Rillenbreite (W) der zweiten Umfangsrichtungsrille (12) zu der stromabwärtigen Seite (H) des Luftstroms an der zweiten Wandfläche (43, 53, 63, 73) des Blocks (21, 31, 41, 51, 61, 71) schrittweise zunimmt, **dadurch gekennzeichnet, dass**
eine virtuelle Ebene durch Verlängern der ersten Wandfläche (42, 52, 62, 72) des ersten Blocks (21, 31, 41, 51, 61, 71) an der stromabwärtigen Seite (H) des Luftstroms erhalten wird, wobei die virtuelle Ebene durch eine Position in der ersten Umfangsrichtungsrille (11) an der Seite des Laufflächenmittelabschnitts (3) des Blockeckabschnitts des zweiten Blocks (21, 31, 41, 51, 61, 71) verläuft und sich mit dem zweiten Block (21, 31, 41, 51, 61, 71) in der ersten Umfangsrichtungsrille (11) überschneidet.

2. Reifen (1) nach Anspruch 1, wobei
sich eine virtuelle Fläche, die sich an der stromabwärtigen Seite (H) des Luftstroms von der zweiten Wandfläche (43, 53, 63, 73) des ersten Blocks (21, 31, 41, 51, 61, 71) erstreckt, zu einer Innenseite der seitlichen Rille (14) zwischen den zwei ersten Blöcken (21, 31, 41, 51, 61, 71) und den zweiten Blöcken (21, 31, 41, 51, 61, 71) erstreckt.

3. Reifen (1) nach Anspruch 1, wobei
die zweite Wandfläche (43, 53, 63, 73) von jedem der Blöcke (21, 31, 41, 51, 61, 71) zu der Seite des Laufflächenmittelabschnitts (3) in Bezug auf die Reifenumfangsrichtung (S) zu der stromabwärtigen Seite (H) des Luftstroms geneigt ist.

4. Reifen (1) nach Anspruch 1, wobei
die zweite Wandfläche (43, 53, 63, 73) von jedem der Blöcke (21, 31, 41, 51, 61, 71) eine gekrümmte Fläche ist, die zu der Innenseite der seitlichen Rille (14) an der stromabwärtigen Seite (H) des Luftstroms gekrümmt ist.

5. Reifen (1) nach Anspruch 1, wobei
die zweite Wandfläche (43, 53, 63, 73) von jedem der Blöcke (21, 31, 41, 51, 61, 71) eine Ebene ist, die zu der Seite des Laufflächenmittelabschnitts (3) in Bezug auf die Reifenumfangsrichtung (S) zu der stromabwärtigen Seite (H) des Luftstroms geneigt ist.

6. Reifen (1) nach Anspruch 1, der ferner Folgendes umfasst:
eine Stollenrille (13), die an einer Seite des Schulterabschnitts (4) der zweiten Umfangsrichtungsrille (12) ausgebildet ist und in die zweite Umfangsrichtungsrille (12) geöffnet ist; und
einen erhöhten Abschnitt (15), der von einer Rillenunterseite der Stollenrille (13) erhöht ist und Wände von Rillen (22) auf beiden Seiten der Stollenrille (13) verbindet.

7. Reifen (1) nach Anspruch 6, wobei der erhöhte Abschnitt (15) auf der Stollenrille (13) einer Schulterblockreihe (30) ausgebildet ist.

8. Reifen (1) nach Anspruch 1, wobei jeder der Vielzahl von Blöcken (21, 31, 41, 51, 61, 71) eine mehreckige Form umfasst.

## Revendications

1. Pneu (1), comprenant:
une première rainure en direction circonférentielle (11) agencée entre une partie centre de bande de roulement (3) et une partie épaulement ;
une deuxième rainure en direction circonférentielle (12) agencée sur un côté de partie épaulement de la première rainure en direction circonférentielle (11),
une pluralité de rainures latérales (14) débouchant dans la première rainure en direction circonférentielle (11) et la deuxième rainure en direction circonférentielle (12) ; et
une pluralité de blocs (21, 31, 41, 51, 61, 71) présents sur une partie bande de roulement (2) et définis par la première rainure en direction circonférentielle (11), la deuxième rainure en direction circonférentielle (12), et la pluralité de rainures latérales (14), une circulation d'air dans une direction opposée à une direction de rotation de pneu (R) étant générée dans la première rainure en direction circonférentielle (11) et la deuxième rainure en direction circonférentielle (12) pendant un roulage d'un véhicule ; dans lequel
chaque bloc (21, 31, 41, 51, 61, 71) parmi la pluralité de blocs (21, 31, 41, 51, 61, 71) présente :
une première surface de paroi (42, 52, 62, 72) délimitant la première rainure en direction circonférentielle (11), la première surface de paroi (42, 52, 62, 72) étant formée à partir d'une position pour laquelle une rainure latérale (14) parmi la pluralité de rainures latérales (14) d'un côté aval (H) de la circulation d'air débouche dans la première rainure en direction circonférentielle (11), vers un côté amont (G) de la circulation d'air ;
une deuxième surface de paroi (43, 53, 63, 73) délimitant la deuxième rainure en direction circonférentielle (12), la deuxième surface de paroi (43, 53, 63, 73) étant formée à partir d'une position pour laquelle la rainure latérale (14) parmi la pluralité de rainures latérales (14) du côté aval (H) de la circulation d'air débouche dans la deuxième rainure en direction circonférentielle (12), vers le côté amont (G) de la circulation d'air ; et
une partie coin de bloc formée au niveau d'une position pour laquelle une rainure latérale (14) parmi la pluralité de rainures latérales (14) du côté amont (G) de la circulation d'air débouche dans la première rainure en direction circonférentielle (11) ; et
la pluralité de blocs (21, 31, 41, 51, 61, 71) comprenant un premier bloc (21, 31, 41, 51, 61, 71) du côté amont (G) par rapport à la circulation d'air et un deuxième bloc (21, 31, 41, 51, 61, 71) du côté aval (H) par rapport à la circulation d'air, le premier bloc (21, 31, 41, 51, 61, 71) et le deuxième bloc (21, 31, 41, 51, 61, 71) étant adjacents l'un à l'autre dans la direction circonférentielle de pneu (S), et
une largeur de rainure (W) de la deuxième rainure en direction circonférentielle (12) augmente progressivement en direction du côté aval (H) de la circulation d'air sur la deuxième surface de paroi (43, 53, 63, 73) du bloc (21, 31, 41, 51, 61, 71), **caractérisé en ce que**
un plan virtuel obtenu par extension, du côté aval (H) de la circulation d'air, de la première surface de paroi (42, 52, 62, 72) du premier bloc (21, 31, 41, 51, 61, 71), le plan virtuel passant par une position au sein de la première rainure en direction circonférentielle (11) du côté partie centre de bande de roulement (3) de la partie coin de bloc du deuxième bloc (21, 31, 41, 51, 61, 71) et intersectant avec le deuxième bloc (21, 31, 41, 51, 61, 71) au sein de la première rainure en direction circonférentielle (11).

2. Pneu (1) selon la revendication 1, dans lequel
une surface virtuelle s'étendant du côté aval (H) de la circulation d'air à partir de la deuxième surface de paroi (43, 53, 63, 73) du premier bloc (21, 31, 41, 51, 61, 71) s'étend en direction d'un intérieur de la rainure latérale (14) entre les deux premier et deuxième blocs (21, 31, 41, 51, 61, 71).

3. Pneu (1) selon la revendication 1, dans lequel
la deuxième surface de paroi (43, 53, 63, 73) de chacun des blocs (21, 31, 41, 51, 61, 71) est inclinée du côté partie centre de bande de roulement (3) par rapport à la direction circonférentielle de pneu (S) en direction du côté aval (H) de la circulation d'air.

4. Pneu (1) selon la revendication 1, dans lequel
la deuxième surface de paroi (43, 53, 63, 73) de chacun des blocs (21, 31, 41, 51, 61, 71) est une surface courbe, courbée en direction de l'intérieur de la rainure latérale (14) du côté aval (H) de la circulation d'air.

5. Pneu (1) selon la revendication 1, dans lequel
la deuxième surface de paroi (43, 53, 63, 73) de chacun des blocs (21, 31, 41, 51, 61, 71) est un plan incliné du côté partie centre de bande de roulement (3) par rapport à la direction circonférentielle de pneu (S) en direction du côté aval (H) de la circulation d'air.

6. Pneu (1) selon la revendication 1, comprenant en outre :
une rainure en barrette (13) formée sur un côté partie épaulement (4) de la deuxième rainure en direction circonférentielle (12) et débouchant dans la deuxième rainure en direction circonférentielle (12) ; et
une partie surélevée (15), surélevée par rapport à un fond de rainure de la rainure en barrette (13) et raccordant des parois de la rainure (22) des deux côtés de la rainure en barrette (13).

7. Pneu (1) selon la revendication 6, dans lequel la partie surélevée (15) est formée sur la rainure en barrette (13) d'une rangée (30) de bloc d'épaulements.

8. Pneu (1) selon la revendication 1, dans lequel chacun parmi la pluralité de blocs (21, 31, 41, 51, 61, 71) présente une forme polygonale.
